# FASCICULE DE BREVET EUROPEEN

(11) **EP 0 730 427 B1**
(45) Date de publication et mention de la délivrance du brevet: **02.08.2000**
(21) Numéro de dépôt: 95903288.9
(22) Date de dépôt: 25.11.1994
(51) Int. Cl.: A47J 37/12, F24C 15/20

(54) **INSTALLATION DE CUISSON ET PANIER POUR UNE TELLE INSTALLATION**
FRITIERAUTOMAT UND DAZUGEHÖRIGER FRITIERKORB
COOKING APPLIANCE AND BASKET THEREFOR

(30) Priorité: 25.11.1993 FR 9314085
(43) Date de publication de la demande: 11.09.1996
(73) Titulaire: INTERMESURES, Société Anonyme, 28290 Arrou (FR)
(72) Inventeur: Garcia, Fernand, 28290 Arrou (FR)
(74) Mandataire: De Vleeschauwer, Natalie
(86) Numéro de dépôt international: EP9403923
(87) Numéro de publication internationale: WO9514417

(56) Documents cités:
- EP-A- 0 146 473
- EP-A- 0 234 996
- EP-A- 0 380 816
- EP-A- 0 396 374
- EP-A- 0 406 475
- WO-A-93/10698
- WO-A-93/18349
- DE-A- 2 451 130
- FR-A- 2 491 031
- FR-A- 2 629 329
- FR-A- 2 672 409
- US-A- 3 690 247
- US-A- 4 945 826
- US-A- 4 971 223
- US-A- 5 133 786

## Description

La présente invention a pour objet une installation pour frire des aliments, installation comprenant une cuve, un système comportant un panier et un mécanisme actionnant ledit système de manière à déplacer le panier par rapport à la cuve entre une position dans laquelle le panier est placé dans la cuve pour frire des aliments et une position dans laquelle le panier est hors de la cuve.

Par le document US-A-3 430 553, on connaît une installation comprenant une cuve, un système tel que décrit plus haut et un mécanisme tel que décrit plus haut.

Dans l'installation selon US-A-3 430 553, le panier doit être actionné manuellement, une fois qu'il est hors de la cuve, pour déverser les aliments fris dans un réceptacle.

Dans cette installation, le panier est monté sur un arbre qui est déplacé par rapport à la cuve par le mécanisme, de sorte que ledit mécanisme est inapte pour faire pivoter suffisamment le panier pour déverser les aliments fris dans un réceptacle.

FR-A- 2 672 409 décrit essentiellement une installation pour frire des aliments, cette installation comprenant une cuve un système comportant un panier et un mécanisme actionnant ledit système de manière à déplacer le panier par rapport à la cuve entre une position dans laquelle le panier est placé dans la cuve et une position dans laquelle le panier est hors de la cuve ladite installation comportant un dispositif pour extraire des fumées ou vapeurs et un canal à travers lequel le fumées ou vapeurs extraites hors de la cuve passent et se condensent au moins partiellement Conformément au préambule de la revendication 1.

L'invention a pour objet d'améliorer les installation du type mentionné précedement. Ceci est atteint par une installation telle que définie à la revendication 1. Les revendications 2 à 15 concernent des modes particuliers d'exécution.

Selon l'invention, l'enveloppe comporte au voisinage de son fond ou à son fond un ou plusieurs canaux à travers le ou lesquels des fumées ou vapeurs extraites hors de la cuve et de l'enveloppe passent et se condensent au moins partiellement, de préférence sensiblement complètement. Grâce à ces passages et condensation, l'énergie calorifique contenue dans les fumées ou vapeurs sert au moins partiellement à chauffer l'enveloppe et donc le volume interne de celle-ci.

Dans une forme de réalisation, le fond présente deux parois séparées l'une de l'autre pour définir entre elles un canal par lequel des fumées et vapeurs et vapeurs extraites de la cuve passent. De préférence, l'enveloppe présente au moins un côté ou face latéral muni d'au moins un canal s'étendant entre :
a) une première ouverture formant un passage entre l'espace ou volume interne de l'enveloppe et ledit canal, cette ouverture étant avantageusement située à un niveau au moins supérieur au bord supérieur de la cuve, de préférence au voisinage du plafond ou de la partie supérieure de l'enveloppe, et
b) une deuxième extrémité par lequel il communique avec le canal ou les canaux du fond de l'enveloppe.

Selon une forme de réalisation, l'enveloppe présente un premier côté ou face latéral à double paroi entre lesquelles est défini un premier canal, un fond à double parois entre lesquelles est défini un deuxième canal, et un deuxième côté ou face latéral à double parois entre lesquelles est défini un troisième canal. Avantageusement le premier côté latéral n'est pas adjacent au deuxième côté latéral et est par exemple de préférence opposé au deuxième côté latéral. Les fumées ou vapeurs extraites de la cuve ou enveloppe sont amenées par le dispositif d'extraction de fumées ou vapeurs à se déplacer :
a) vers le bas dans le premier canal (ou au moins partiellement vers le bas),
b) ensuite sensiblement horizontalement dans le deuxième canal et enfin
c) vers le haut (ou au moins partiellement vers le haut) dans le troisième canal. De préférence, les fumées ou vapeurs sont aspirées à l'extrémité du troisième canal opposé à celle adjacente au deuxième canal.

De préférence, le fond est associé à au moins un dispositif pour condenser au moins partiellement les fumées et/ou vapeurs. Par exemple le ou les canaux du fond de l'enveloppe servent de bac ou bassin de récupération d'eaux, de condensation, et présentent avantageusement un ou plusieurs conduits d'évacuation d'eaux condensées. Le ou les canaux peuvent être associées à un ou plusieurs échangeurs de chaleur dans lequel ou lesquels circule un fluide, de préférence de l'eau. Dans une forme de réalisation, le ou les canaux du fond présente une ouverture ou amenée d'air frais, cet air étant aspiré par le moyen d'extraction des fumées et vapeurs et agissant pour abaisser la température des vapeurs et favoriser leur condensation.

Dans une forme de réalisation, l'installation comprend un dispositif pour déverser automatiquement les aliments fris dans un réceptacle, ce dernier étant en particulier situé dans l'enveloppe même. Grâce à un tel déversage automatique l'enveloppe ne doit pas être ouverte pour manipuler le panier. L'enveloppe est dès lors sensiblement étanche, de préférence totalement étanche, c'est-à-dire que l'enveloppe avec les portes d'admission d'aliments à frire et d'extraction d'aliments fris en position fermée ne reçoit sensiblement pas d'air extérieur lorsque le dispositif d'aspiration ou d'extraction des fumées ou vapeurs est mis en fonctionnement.

Par exemple le panier est monté, au voisinage d'un premier de ses bords, sur un arbre fixe par rapport à la cuve, un mécanisme agissant sur ledit arbre pour faire pivoter ledit panier. La face du panier adjacente au bord opposé audit premier bord est agencée par rapport à la cuve de manière à ce que le panier peut être amené par rotation dans la cuve et de préférence de manière à ce qu'en position du panier dans la cuve, une partie de ladite face est adjacente d'une paroi de la cuve.

Dans une forme de réalisation, la face adjacente audit premier bord est agencée de manière à ce que, lorsque le panier est dans la cuve pour frire des aliments, ladite face suit la forme de la cuve.

De façon avantageuse, le panier comprend un bord supérieur de forme sensiblement rectangulaire et présente une première face s'étendant entre un bord supérieur adjacent à l'arbre et un bord inférieur, une deuxième face opposée à ladite première face et s'étendant entre un bord supérieur et un bord inférieur, et un fond s'étendant entre le bord inférieur de la première face et le bord inférieur de la deuxième face, ledit fond s'étendant au moins partiellement dans un plan incliné par rapport à un plan horizontal lorsque le panier est dans la cuve pour frire des aliments.

L'angle entre le plan dans lequel s'étend le fond et un plan horizontal est par exemple de 30 à 50° lorsque le panier est dans la cuve pour frire des aliments.

Selon une particularité d'un panier, la première face s'étend dans un plan, le fond étant incliné par rapport audit plan d'un angle supérieur à 100°, de préférence à 110°, en particulier voisin de 120-125° (angle inférieur à 180°).

Dans une forme de réalisation avantageuse, le panier est muni au voisinage de l'arbre d'un collecteur destiné à guider les aliments fris pour qu'ils tombent dans un réceptacle lors de la rotation du panier hors de la cuve.

Le mécanisme de l'installation pour manoeuvrer l'arbre du panier comprend avantageusement un moteur entraînant uniquement dans un sens un arbre, et un moyen pour convertir le mouvement de rotation de l'arbre entraîné par le moteur en un mouvement alternatif. Ledit moyen comprend de préférence, une manivelle montée sur l'arbre du moteur, une manivelle montée mur l'arbre du panier, et une barre reliée à pivotement aux dites manivelles.

Selon une forme de réalisation, l'installation comprend un logement pour le tunnel, dont le fond présente un passage , ledit logement présentant une première ouverture pour permettre l'ouverture du couvercle du récipient et une deuxième ouverture par laquelle est engagé le fond du tunnel (élément présentant un tunnel ou passage) pour l'introduction d'une portion d'aliments dans le panier. Le logement présente une paroi servant à obturer le passage du tunnel lors de l'introduction d'une portion d'aliments dans le tunnel (récipient avec deux ouvertures), tandis que le tunnel présente une paroi servant à obturer la deuxième ouverture lors de l'introduction d'une portion d'aliments dans le tunnel.

D'autres particularités et détails de l'invention ressortiront de la description détaillée suivante dans laquelle il est fait référence aux dessins ci-annexés.

Dans ces dessins :
- les figures 1 et 2 montrent schématiquement en perspective une installation suivant l'invention porte avant fermée et ouverte ;
- la figure 3 est une vue en perspective d'un panier ;
- la figure 4 est une vue en perspective d'une cuve ;
- les figures 5A à E montrent différentes étapes du mécanisme agissant sur le panier ;
- les figures 6A à E montrent les positions du panier par rapport à la cuve pour les étapes représentées aux figures 5A à E ;
- la figure 7 est une vue schématique d'un dispositif de traitement des fumées ;
- les figures 8A à C montrent des étapes du chargement d'une portion de frites dans le panier, et
- la figure 9 est une vue en coupe suivant la ligne IX-IX du panier montré à la figure 3.

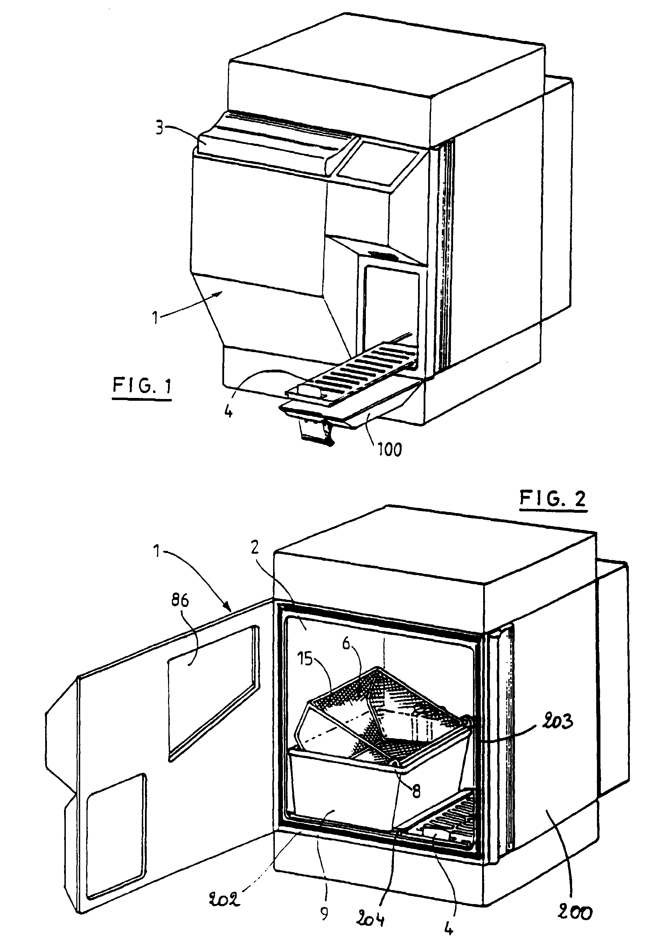

L'installation représentée aux figures 1 et 2 présente une porte avant 1 permettant l'accès à une chambre 2 ou volume interne d'une enveloppe 200. La porte 1 est munie d'un système 3 pour charger une portion d'aliments, par exemple de frites, à frire et d'un battant pivotant 100 agissant sur un support 4 pour retirer un réceptacle hors de la chambre 2 ou pour placer un réceptacle dans une chambre 2. Ce réceptacle est destiné à recevoir les produits fris.

L'installation comporte également un mécanisme 5 pour faire basculer le panier 6 et un dispositif 7 de traitement des fumées.

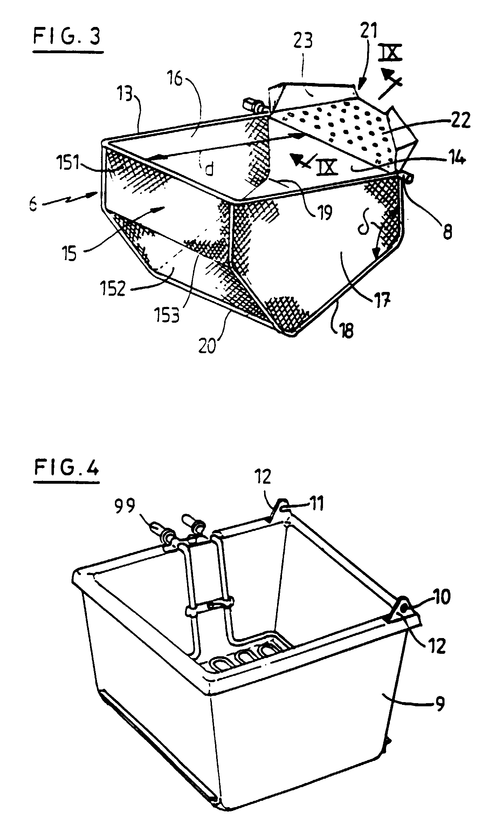

Le panier 6 est représenté à la figure 3. Ce panier 6 est monté sur un arbre 8 fixe par rapport à la cuve de cuisson 9. Les extrémités de cet arbre 8 sont par exemple introduites dans des ouvertures 10,11 d'oreilles 12 solidaires de la cuve 9. L'ouverture 10 est circulaire tandis que l'ouverture 11 a la forme d'une fente, de sorte que le panier peut être monté en introduisant une extrémité de l'arbre 8 dans l'ouverture 10 et ensuite en glissant l'autre extrémité de l'arbre dans l'ouverture 11.

Le panier 6 présente un bord supérieur 13 de forme rectangulaire et comprend un fond 18 et quatre faces 14,15,16,17 ajourées, deux faces latérales 16,17 perpendiculaires à l'arbre 8, une face avant 14 s'étendant entre l'arbre 8 et un bord inférieur 19, et une face arrière 15 s'étendant entre un bord supérieur et un bord inférieur 20, le fond 18 s'étendant entre le bord inférieur 19 de la face avant et le bord inférieur 20 de la face arrière 15.

Le fond 18 s'étend dans un plan incliné d'un angle δ de 120°-125° par rapport au plan dans lequel s'étend la première face 14.

La face arrière 15 qui, dans une forme de réalisation peut avoir la forme d'un secteur d'un cylindre, comporte une partie supérieure 151 et une partie inférieure 152 reliées entre elles, lesdites parties étant agencées de manière à ce que le bord supérieur, le bord inférieur et le bord intermédiaire 153 (situé entre les parties inférieure et supérieure) soient situés sensiblement à une même distance d par rapport à l'arbre 8.

Le panier 6 porte du côté de l'arbre 8 un collecteur 21 destiné à guider les aliments fris hors du panier 6 vers un réceptacle. Ce collecteur 21 présente un plat 22 s'étendant sensiblement dans le prolongement du plan dans lequel s'étend la face avant 14. Toutefois, de préférence, ce plat 22 présente une inclinaison β de 5 à 10° par rapport au plan de la face avant, de sorte que le plat 22 surplombe le panier 6 lorsque ce dernier est dans la cuve de cuisson 9, cette dernière présentant des résistances chauffantes 99.

Le plat 22 a une forme sensiblement trapézoïdale et est muni de bords latéraux 23.

L'arbre 8 et les oreilles 10,11 de la cuve 9 sont agencés de manière à ce que l'arbre 8 s'étend au-dessus de la cuve 9, ceci permettant que le liquide de cuisson, par exemple huile ou graisse, retombe dans la cuve de cuisson lorsque le panier 6 est soulevé hors de la cuve 9. L'inclinaison β supplémentaire permet qu'une rotation supplémentaire du panier 6 soit nécessaire pour avoir le passage des aliments fris sur le plat 22, cette rotation supplémentaire permettant un égouttage supplémentaire des aliments fris. Dans une forme de réalisation, le plat 22 présente une série d'orifices permettant une évacuation supplémentaire d'huile ou graisse située sur les aliments fris ou frites et une gorge 24 prolongée par un plat 25 formant une chambre 26 ouverte du côté de l'arbre 8 pour récupérer l'huile ou graisse et guider cette huile ou graisse dans la cuve lorsque le panier 6 est en position pour remplir le panier 6 d'aliments à frire ou est dans la cuve (position de cuisson).

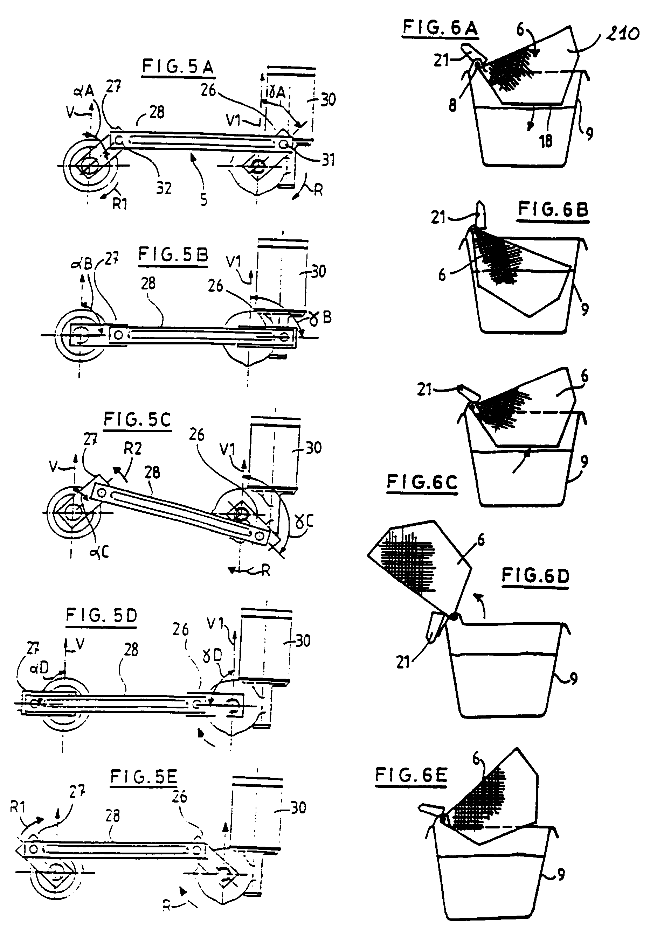

Le mécanisme 5 pour faire pivoter le panier 6 autour de l'arbre 8 comprend une manivelle 26 montée sur l'arbre 29 entraîné par un moteur 30 tournant dans un seul sens R, une manivelle 27 montée sur l'arbre 8 du panier 6 et une barre 28 reliant les dites manivelles 26,27 via des pivots 31,32. Les différentes positions des manivelles 26,27 et du panier 6 sont montrées aux figures 5A à E et 6 A à E.

La position de la figure 6A correspond à une position dans laquelle le panier 6 se trouve au-dessus du bain d'huile (le fond 18 s'étendant par exemple dans un plan horizontal).

Par rapport à un axe vertical V s'étendant vers le haut depuis l'axe de l'arbre 8, la manivelle 27 s'étend dans une direction formant un angle αA de 45°, tandis que la manivelle 26 s'étend dans une direction formant un angle γ A de 45° par rapport à l'axe vertical V1 s'étendant vers le haut depuis l'arbre entraîné par le moteur.

Cette position correspond à la position du panier 6 pour le charger avec une portion de frites à frire.

Par rotation R de la manivelle 26, la manivelle 27 tourne dans le sens R de manière à abaisser le panier 6 dans la cuve 9 pour permettre la cuisson des aliments.

Les figures 5B et 6B montrent la position des manivelles et du panier en position abaissée.

La manivelle 27 s'étend dans une direction formant un angle αB de 90° par rapport à la verticale V, tandis que la manivelle 26 s'étend dans une direction formant un angle γB de ± 90°. Ceci revient à dire que les manivelles s'étendent sensiblement dans un plan horizontal.

Une fois que le temps de cuisson est écoulé, le moteur entraîne à nouveau en rotation R la manivelle 26, de sorte que la manivelle 27 tourne dans le sens R2, sans opposé à R1, de manière à lever la panier 6 hors de la cuve 9.

Dans la position de la figure 5C, le fond 18 du panier 6 se trouvant juste au-dessus du bain d'huile, la manivelle 26 s'étend dans une direction formant un angle γC de ± 135° par rapport à la verticale V, tandis que la manivelle 27 s'étend dans une direction formant un angle αC de ± 45°.

Les frites peuvent à partir de ce moment s'égoutter.

La rotation de la manivelle 26 dans le sens R continue.

Lorsque la manivelle 26 s'étend dans une direction formant un angle γD de -90° par rapport à V1, la manivelle 27 s'étend dans une direction formant un angle αD de -90° par rapport à V (figure 5D). Dans cette position, le panier 6 a pivoté de sorte qu'il ne surplombe plus la cuve 9.

Lors de la rotation du panier les frites se déplacent progressivement vers la première face 14 du panier et ensuite sur le plat 22. Ce déplacement progressif des frites au-dessus de la cuve permet d'assurer une meilleure élimination de l'huile ou de la graisse des frites.

La rotation de la manivelle 26 dans le sens R continue ensuite pour ramener le panier 6 dans la position de la figure 6A. Lors de cette rotation R de la manivelle 26, la manivelle 27 tourne dans le mens R1 (voir figures 5E et 6E).

Comme on le voit des figures 6A à E, la face 15 du panier (opposée à la face 14 adjacente de l'arbre 8) est agencée par rapport à la cuve de manière à ce que le panier peut étre amené dans la cuve ou retiré hors de la cuve et de manière à ce qu'en position du panier dans la cuve, une partie de la face 15 est adjacente de la paroi de la cuve 9.

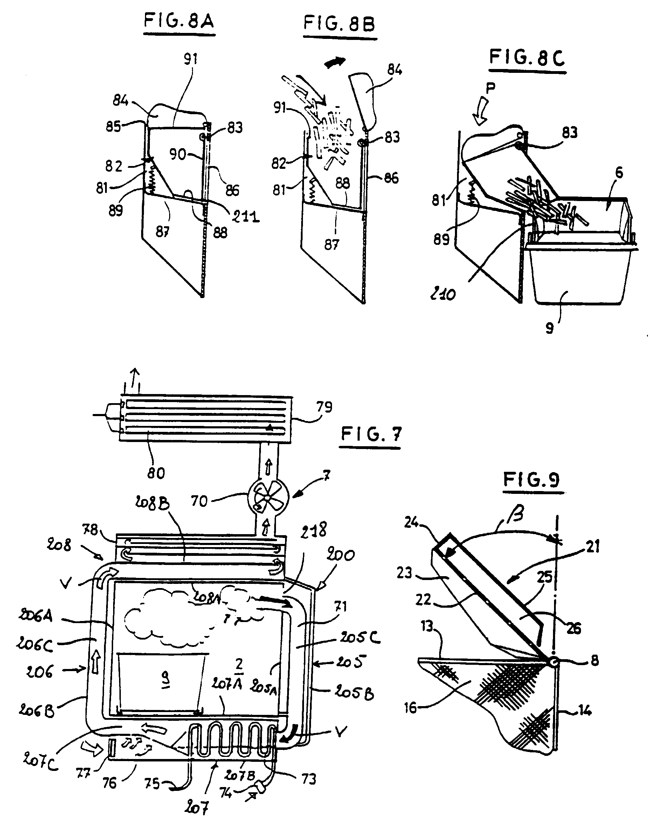

La figure 7 montre schématiquement un dispositif de traitement de fumées 7.

Ce dispositif 7 comprend :
* un moyen 70 d'aspiration des fumées hors de la chambre 2 et de refoulement des fumées, tel qu'un ventilateur; et
* un conduit 71 reliant la chambre 2 au moyen 70.

Sur le conduit 71 sont montés une précondensateur 72 comprenant un circuit 73 relié à une amenée d'eau 74 et à une décharge 75 et une paroi 76 refroidie par une amenée 77 d'air frais, et un condensateur par exemple à lamelle 78.

Les fumées après condensation sont ensuite refoulées dans un ozoneur 79 comprenant une série de lampes 80 avant d'être refoulées dans le milieu extérieur.

Un système 3 pour charger une portion d'aliments à frire est représenté aux figures 8A à C.

L'installation comprend un logement 81 dans lequel s'étend un récipient formant tunnel 82 monté sur un arbre 83 solidaire du logement 81. Le logement 81 présente une ouverture supérieure 85 permettant le pivotement du couvercle 84 du récipient de manière à l'ouvrir, une ouverture latérale 86 s'étendant depuis le voisinage de l'arbre 83 jusqu'au voisinage du bord inférieur du récipient 82, et une paroi inférieure 87 destinée à servir à obturer le fond ouvert 88 du récipient lorsque le couvercle 84 est en position ouverte.

Le récipient-tunnel qui présente un fond ou extrémité ouvert 88 eut soumis à l'action d'un ressort 89 destiné à ramener le récipient, en l'absence de poussée P sur son couvercle, dans une position dans laquelle la paroi 90 du récipient articulée à l'arbre 83 obture l'ouverture latérale 86 du logement 81.

Le fonctionnement du système eut le suivant :

En position normale (figure 8A), la paroi 90 obture l'ouverture 86. Le couvercle 84 est ensuite ouvert par pivotement pour permettre l'introduction d'une portion de frites dans le récipient (figure 8B)

Après la fermeture du couvercle 84, une pression P est exercée sur le couvercle 84 de sorte que le couvercle et le récipient 82 pivotent de manière à ce que l'ouverture supérieure 91 du récipient 82 soit toujours obturée par le couvercle 84 et de manière à ce que l'ouverture latérale 86 n'est plus obturée par la paroi 87 et que le fond ne soit plus obturé au moins partiellement par la paroi 90 et soit partiellement engagé dans la chambre 2, les frites à cuire tombant alors dans le panier 6 (figure 8C). Ensuite, grâce à l'action du ressort 89, dés qu'aucune pression n'est exercée sur le couvercle 84, le récipient retourne dans sa position de la figure 8A.

Le mécanisme 5 actionnant le panier est avantageusement situé hors de l'espace interne 2 de l'enveloppe 200. La face avant 202 est munie d'un joint 203 pour assurer, lorsque la porte 1 est an position fermée, une étanchéité.

La cuve de cuisson 9 est placée sur des rails 204 et peut être ôtée hors de l'enveloppe 200 (porte 1 ouverte) par simple glissament. Ceci permet un lange aisé de la cuve 9 et du panier 6 après les avoir ôtés hors de l'enveloppe.

L'enveloppe 200 est munie d'un système de sécurité tel qu'un verrou qui ne peut être débloqué que si l'installation est sous tension et que la température de l'huile ou graisse de cuisson est inférieure à 50° C.

Le circuit de fumées dans l'installation représentée sera expliqué avec plus de détail ci-après :

Le ventilateur 70 provoque une aspiration des fumées et vapeurs V hors de la chambre 2 de l'enveloppe 200. Cette enveloppe 200 comporte deux faces latérales opposées 205,206, un fond 207 et un plafond 208. Ces fond, plafond et faces latérales présentent une paroi 205A, 206A, 207A, 208A tournée vers l'intérieur 2 de l'enveloppe 200 et une paroi 205B, 206B, 207B, 208B tournée vers l'extérieur de l'enveloppe 200. Entre une paroi tournée vers l'intérieur 2 et une paroi tournée vers l'extérieur est défini un canal 205C, 206C, 20c, 208C par lequel sont aspirées des fumées et vapeurs V.

L'enveloppe présente une fenêtre 218 située au voisinage du plafond 208 ou à son plafond et destinée à former un passage entre le canal 205C et la chambre intérieure 2 de l'enveloppe 200.

Les fumées et vapeurs aspirées s'écoulent donc vers le bas (mouvement descendant) dans le canal 205C, horizontalement dans le canal 207C, vers le haut (mouvement ascendant) dans le canal 206C et horizontalement dans le canal 208C. Les fumées et vapeurs sortant du canal 208C passent dans le ventilateur d'aspiration. Dans ces canaux, les vapeurs sont aptes à se condenser et les eaux de condensation ruissellent vers le canal 207C du fond de l'enveloppe. Pour accroître la condensation, un échangeur de chaleur 73 soumet les vapeurs passant dans le canal 207C à un refroidissement.

Etant donné que les vapeurs V qui sont sensiblement complètement condensées à la sortie du canal 208C sont essentiellement condensées au voisinage du fond 207 de l'enveloppe 200, une partie importante voire prépondérante de l'énergie des vapeurs est libérée au fond 207, de sorte qu' au moins les parois 207A et les parois latérales 205A, 206A au voisinage du fond 207 sont portées à une température suffisante pour éviter toute condensation de vapeurs sur celles-ci. En empêchant une telle condensation dans l'enveloppe, on permet au dispositif d'extraction ou ventilateur d'aspirer toutes les vapeurs de cuisson hors de l'enveloppe.

L'atmosphère de l'enveloppe après une étape de cuisson peut ainsi être maintenue chaude et avec une teneur relativement faible en humidité, de sorte que les aliments fris restant dans le panier ou dans le réceptacle à l'intérieur de l'enveloppe 200 resteront chauds. Puisque le réceptacle se trouve dans l'enveloppe 200 lorsqu'il reçoit des aliments fris, ce réceptacle est chauffé. Ceci permet de garder encore plus longtemps les aliments fris chauds.

Pour éviter qu'il ne soit possible d'introduire une nouvelle portion d'aliments à frire dans l'enveloppe lorsque le panier 6 n'est pas au-dessus de la cuve, l'installation est avantageusement munie d'un système de sécurité.

Dans la forme de réalisation représentée, l'arbre de rotation 8 du panier 6 et l'axe de pivotement 83 du récipient tunnel 82 sont perpendiculaires entre eux. Pour empêcher le pivotement du tunnel 82 ou pour limiter son pivotement, un côté latéral 210 du panier est utilisé.

Lorsque le panier est dans la position de la figure

Lorsque le panier est dans la position de la figure 6A, des aliments à frire peuvent être amenés dans le panier 6 par pivotement du tunnel.

Lorsque le panier est abaissé (figure 6B), le prolongement 21 sert de butée pour empêcher ou limiter le pivotement du tunnel.

Lorsque le panier est déplacé hors de la cuve, pour amener les aliments fris dans un réceptacle et ramener le panier en position de la figure 6A, le prolongement 21 et la paroi 210 du panier servent de butée empêchant ou limitant le pivotement du tunnel 82.

L'empêchement ou la limitation du pivotement du tunnel 82 est donc obtenu grâce à la butée de la paroi 90 du tunnel ou de son extrémité 211 sur le prolongement 21 ou sur la paroi 210 du panier 6.

La paroi 210 s'étend sensiblement dans un plan perpendiculaire à l'axe de l'arbre 8, sensiblement parallèle à l'axe de pivotement du tunnel 82. Ceci permet d'assurer une distance sensiblement constante entre ladite paroi et l'extrémité 211 de la paroi 90 du tunnel et donc un pivotement maximum pour le tunnel 82.

Vu la non-condensation de vapeurs à l'intérieur de l'enveloppe (2), la possibilité et la facilité de nettoyage, l'installation suivant l'invention présente un haut degré d'hygiène. De plus la non condensation de vapeurs à l'intérieur de l'enveloppe permet d'éviter des problèmes de corrosion, de dégradation d'huile ou de graisse, de perte d'énergie (par exemple par condensation de vapeurs dont les eaux tombent dans la cuve de cuisson), de moindres chocs thermiques entre la température de l'huile ou de la graisse et la température située au-dessus du bain de cuisson, en particulier au cours de phases de cuisson, etc.

## Revendications

1. Installation pour frire des aliments, cette installation comprenant (a) une cuve (9), (b) un système comportant un panier (6), (c) un mécanisme (5) actionnant ledit système de manière à déplacer le panier (6) par rapport à la cuve (9) entre une position dans laquelle le panier est placé dans la cuve pour frire des aliments et une position dans laquelle le panier est hors de la cuve (9) pour amener les aliments fris dans un récipient, (d) un système pour introduire une portion d'aliments à frire dans le panier, et (e) une porte pour retirer le récipient dans lequel les aliments fris sont amenés, ladite installation comportant une enveloppe (200) définissant une chambre (2) dans laquelle se trouve la cuve (9) et un dispositif (7) pour extraire des fumées ou vapeurs, cette enveloppe comportant au voisinage de son fond (207) ou à son fond un ou plusieurs canaux à travers lesquels les ou des fumées ou vapeurs extraites passent et se condensent au moins partiellement, caractérisée en ce que le dispositif (7) extrait les fumées ou vapeurs hors de la chambre (2) de manière à ce qu'au moins partiellement l'énergie des fumées ou vapeurs soit récupérée pour chauffer l'enveloppe, et en ce que le système pour charger une portion d'aliments à frire dans un panier comporte un tunnel (82) présentant un couvercle (84) amovible ou monté à pivotement, ledit tunnel étant monté à pivotement dans un logement (81) présentant une première ouverture (85) pour permettre l'ouverture du couvercle (84) et une deuxième ouverture (86) pour permettre le passage des aliments à frire du tunnel (82) vers le panier (6), ledit tunnel (82) étant capable de pivoter entre, d'une part, une première position pour laquelle le tunnel (82) s'étend dans le logement pour empêcher le passage d'aliments à frire du tunnel (82) vers le panier (6) et pour introduire, lorsque le couvercle (84) est en position ouverte, une portion d'aliments à frire dans le tunnel (82), et, d'autre part, après fermeture du couvercle (84), une deuxième position pour introduire, via la deuxième ouverture (86), la portion d'aliments du tunnel (82) dans le panier (6).

2. Installation suivant la revendication 1, caractérisée en ce que le tunnel (82) présente à son fond un passage (88), et en ce que le logement (81) présente une première ouverture (85) pour permettre l'ouverture du couvercle (84) du tunnel (82) et une deuxième ouverture (86) au travers de laquelle est engagée le passage (88) du fond du tunnel (82) pour introduire une portion d'aliments du tunnel (82) dans le panier (6), ledit logement (81) présentant une paroi (87) servant à obturer le passage (88) du tunnel (82) lors de l'introduction d'une portion d'aliments dans le tunnel (82), tandis que le tunnel (82) présente une paroi (90) servant à obturer la deuxième ouverture (86) lors de l'introduction d'une portion d'aliments dans le tunnel (82).

3. Installation suivant la revendication 1 ou 2, caractérisée en ce que la chambre (2) présente un support (4) pour le récipient, de sorte que l'atmosphère chaude de la chambre (2) chauffe ledit récipient.

4. Installation suivant l'une quelconque des revendications 1 à 3, caractérisée en ce que le fond (207) de l'enveloppe (200) présente deux parois (207A, 207B) séparées l'une de l'autre pour définir un canal (207C) au travers duquel les ou des fumées ou vapeurs extraites hors de la chambre (2) passent et se condensent au moins partiellement, de manière à ce qu'au moins partiellement l'énergie des fumées ou vapeurs soit récupérée pour chauffer le fond (207C) de l'enveloppe (200).

5. Installation suivant la revendication 4, caractérisée en ce que l'enveloppe (200) présente au moins un côté latéral présentant deux parois (205A, 205B) séparées l'une de l'autre pour définir un canal (205C) s'etendant depuis une ouverture de la chambre (2) définie par l'enveloppe et située à un niveau au moins supérieur au bord supérieur de la cuve (9) jusqu'à une extrémité dudit canal (205C) par lequel il communique avec le canal (207C) défini par les parois (207A, 207B) du fond (207) de l'enveloppe (200).

6. Installation suivant la revendication 4 ou 5, caractérisée en ce que l'enveloppe (200) présente un premier côté latéral à double parois (205A, 205B) entre lesquelles est défini un premier canal (205C), un fond (207) à double parois (207A,207B) entre lesquelles est défini un deuxième canal (207C) et un deuxième côté latéral à double parois (206A,206B) entre lesquelles est défini un troisième canal (206C), les fumées ou vapeurs extraites de la chambre (2) définie par l'enveloppe étant amenées par le dispositif d'extraction de fumées ou vapeurs (7) à se déplacer successivement vers le bas dans le premier canal (205C), ensuite sensiblement horizontalement dans le deuxième canal (207C) et enfin vers le haut dans le troisième canal (206C).

7. Installation suivant l'une quelconque des revendications 4 à 6, caractérisée en ce que le dispositif de traitement des fumées et vapeurs (7) comporte un ozoneur (79).

8. Installation suivant l'une quelconque des revendications précédentes, caractérisée en ce que l'enveloppe (200) présente une porte pour l'admission d'aliments à frire dans le panier et une porte pour retirer le récipient contenant des aliments fris hors de la chambre (2), lesdites portes étant agencées de manière à empêcher tout passage d'air dans la chambre (2) et à assurer que toutes les vapeurs ou fumées extraites de la chambre (2) passent par le ou des canaux de l'enveloppe (200).

9. Installation suivant l'une quelconque des revendications 4 à 8, caractérisée en ce que le ou les canaux (207C) du fond (207) de l'enveloppe (200) servent de bac ou bassin de récupération d'eaux de condensation et présentent au moins un conduit d'évacuation d'eaux condensées, ledit ou desdits canaux (207C) du fond de l'enveloppe étant associés à un ou plusieurs échangeurs de chaleur (73) dans lesquels ou lequel circule un fluide.

10. Installation suivant la revendication 9, caractérisée en ce que le ou les canaux (207C) du fond (207) de l'enveloppe (200) présente une amenée (77) d'air frais, cet air étant aspiré par le moyen d'extraction (70) des fumées et vapeurs hors de la chambre (2), ledit air frais agissant pour favoriser la condensation de vapeurs.

11. Installation suivant l'une quelconque des revendications précédentes, cette installation comprenant un panier monté au voisinage d'un premier de ses bords sur un arbre (8) fixe par rapport à la cuve (9), le panier présentant une première face (14) adjacente audit arbre (8), une deuxième face (15) opposée à ladite première face (14), deux faces latérales (16,17) et un fond (18) s'étendant entre lesdites première et deuxième faces (14,15), la deuxième face (15) du panier (6) opposée à ladite première face (14) étant agencée par rapport à la cuve (9) de manière à ce que le panier (6) peut être amené par rotation dans la cuve (9), tandis que ledit fond (18) du panier (6) présente au moins une partie adjacente à la première face qui s'étend dans un plan incliné par rapport à ladite première face (14), ladite partie s'étendant dans un plan incliné par rapport à un plan horizontal lorsque le panier (6) est en position dans la cuve (9) pour frire des aliments, caractérisée en ce que l'inclinaison dudit plan incliné est telle que la partie du fond s'étendant dans celui-ci se trouve à un niveau situé sous le bord inférieur (19) de la première face (14), lorsque le panier (6) est en position dans la cuve (9) pour frire des aliments.

12. Installation suivant la revendication 11, caractérisée en ce que l'inclinaison δ entre le plan dans lequel s'étend la première face (14) et le plan de la partie inclinée du fond (18) adjacente de la première face est supérieure à 100°, avantageusement supérieure à 110°, de préférence d'environ 120-125°.

13. Installation suivant l'une quelconque des revendications 11 et 12, caractérisée en ce que le panier (6) présente un collecteur (21) situé dans le prolongement de la première face (14) et destiné à guider les aliments fris hors du panier (6) lorsque ce dernier est dans une position hors de la cuve (9), ledit collecteur (21) étant agencé de manière à ce qu'il surplombe le panier (6) lorsque ce dernier est dans la cuve de cuisson (9).

14. Installation suivant l'une quelconque des revendication 11 à 13, caractérisée en ce que ladite partie inclinée du fond (18) qui est adjacente à la première face s'étend dans un plan formant un angle de 30 à 50° par rapport à un plan horizontal lorsque le panier (6) est dans la cuve (9) pour frire des aliments.

15. Installation suivant l'une quelconque des revendications 11 à 14, caractérisée en ce que le mécanisme (5) comprend un moteur (30) entraînant en rotation uniquement dans un sens un arbre et un moyen pour convertir le mouvement de rotation de l'arbre en un mouvement alternatif, ledit moyen comprenant une manivelle (26) montée sur un arbre entraîné par le moteur (30), une manivelle (27) montée sur l'arbre (8) du panier (6), et une barre reliée à pivotement aux dites manivelles.

## Claims

1. Appliance for the frying of foods, this appliance comprising (a) a vessel (9), (b) a system comprising a basket (6), (c) a mechanism (5) actuating the said system so as to displace the basket (6) relative to the vessel (9) between a position, in which the basket is placed in the vessel in order to fry foods, and a position, in which the basket is out of the vessel (9) in order to deliver the fried foods into a container, (d) a system for introducing a portion of foods to be fried into the basket and (e) a door for removing the container into which the fried foods are delivered, the said appliance comprising a casing (200) defining a chamber (2), in which the vessel (9) is located, and a device (7) for extracting smoke or vapours, this casing comprising, in the vicinity of its bottom (207) or at its bottom, one or more ducts, through which the extracted smoke or vapours pass and condense at least partially, characterized in that the device (7) extracts the smoke or vapours out of the chamber (2), in such a way that the energy of the smoke or vapours is at least partially recovered in order to heat the casing, and in that the system for loading a portion of foods to be fried into a basket comprises a tunnel (82) having a removable or pivotably mounted cover (84), the said tunnel being mounted pivotably in a receptacle (81) having a first orifice (85) for allowing the opening of the cover (84) and a second orifice (86) for allowing the foods to be fried to pass from the tunnel (82) towards the basket (6), the said tunnel (82) being capable of pivoting between, on the one hand, a first position, in which the tunnel (82) extends into the receptacle, in order to prevent foods to be fried from passing from the tunnel (82) towards the basket (6) and in order, when the cover (84) is in the open position, to introduce a portion of foods to be fried into the tunnel (82), and, on the other hand, after the closing of the cover (84), a second position for introducing the portion of foods from the tunnel (82) into the basket (6) via the second orifice (86).

2. Appliance according to Claim 1, characterized in that the tunnel (82) has a passage (88) at its bottom, and in that the receptacle (81) has a first orifice (85) for allowing the opening of the cover (84) of the tunnel (82) and a second orifice (86), through which the passage (88) of the bottom of the tunnel (82) is engaged, in order to introduce a portion of foods from the tunnel (82) into the basket (6), the said receptacle (81) having a wall (87) serving for shutting off the passage (88) of the tunnel (82) during the introduction of a portion of foods into the tunnel (82), whilst the tunnel (82) has a wall (90) serving for shutting off the second orifice (86) during the introduction of a portion of foods into the tunnel (82).

3. Appliance according to Claim 1 or 2, characterized in that the chamber (2) has a support (4) for the container, so that the hot atmosphere of the chamber (2) heats the said container.

4. Appliance according to any one of Claims 1 to 3, characterized in that the bottom (207) of the casing (200) has two walls (207A, 207B) separated from one another so as to define a duct (207C), through which the smoke or vapours extracted out of the chamber (2) pass and condense at least partially, in such a way that the energy of the smoke or vapours is at least partially recovered in order to heat the bottom (207C) of the casing (200).

5. Appliance according to Claim 4, characterized in that the casing (200) has at least one lateral side having two walls (205A, 205B) separated from one another so as to define a duct (205C) which extends from an orifice of the chamber (2), the said orifice being defined by the casing and being located at a level at least higher than the upper edge of the vessel (9), as far as an end of the said duct (205C) via which the latter communicates with the duct (207C) defined by the walls (207A, 207B) of the bottom (207) of the casing (200).

6. Appliance according to Claim 4 or 5, characterized in that the casing (200) has a first lateral side with double walls (205A, 205B), between which a first duct (205C) is defined, a bottom (207) with double walls (207A, 207B), between which a second duct (207C) is defined, and a second lateral side with double walls (206A, 206B), between which a third duct (206C) is defined, the smoke or vapours extracted from the chamber (2) defined by the casing being induced by the smoke or vapour extraction device (7) to be displaced successively downwards in the first duct (205C), then substantially horizontally in the second duct (207C) and finally upwards in the third duct (206C).

7. Appliance according to any one of Claims 4 to 6, characterized in that the smoke and vapour treatment device (7) comprises an ozonizer (79).

8. Appliance according to any one of the preceding claims, characterized in that the casing (200) has a door for admitting foods to be fried into the basket and a door for removing the container containing fried foods out of the chamber (2), the said doors being arranged so as to prevent any passage of air into the chamber (2) and to ensure that all the vapours or smoke extracted from the chamber (2) pass via the duct or ducts of the casing (200).

9. Appliance according to any one of Claims 4 to 8, characterized in that the duct or ducts (207C) of the bottom (207) of the casing (200) serve as a tub or basin for the recovery of condensation water and have at least one conduit for the discharge of condensed water, the said duct or ducts (207C) of the bottom of the casing being associated with one or more heat exchangers (73) in which a fluid circulates.

10. Appliance according to Claim 9, characterized in that the duct or ducts (207C) of the bottom (207) of the casing (200) has or have a fresh-air intake (77), this air being sucked in by the means (70) for extracting the smoke and vapours out of the chamber (2), the said fresh air acting so as to assist the condensation of vapours.

11. Appliance according to any one of the preceding claims, this appliance comprising a basket mounted, in the vicinity of a first of its edges, on a shaft (8) fixed relative to the vessel (9), the basket having a first face (14) adjacent to the said shaft (8), a second face (15) opposite the said first face (14), two lateral faces (16, 17) and a bottom (18) extending between the said first and second faces (14, 15), the second face (15) of the basket (6) opposite the said first face (14) being arranged relative to the vessel (9) in such a way that the basket (6) can be brought into the vessel (9) by rotation, whilst the said bottom (18) of the basket (6) has at least one part which is adjacent to the first face and which extends in a plane inclined relative to the said first face (14), the said part extending in a plane inclined relative to a horizontal plane when the basket (6) is in position in the vessel (9) for frying foods, characterized in that the inclination of the said inclined plane is such that that part of the bottom which extends in the latter is located at a level below the lower edge (19) of the first face (14) when the basket (6) is in position in the vessel (9) for frying foods.

12. Appliance according to Claim 11, characterized in that the inclination δ between the plane in which the fist face (14) extends and the plane of that inclined part of the bottom (18) which is adjacent to the first face is greater than 100°, advantageously greater than 110°, preferably approximately 120-125°.

13. Appliance according to either one of Claims 11 and 12, characterized in that the basket (6) has a collector (21) located in the extension of the first face (14) and intended for guiding the fried foods out of the basket (6) when the latter is in a position out of the vessel (9), the said collector (21) being arranged in such a way that it overhangs the basket (6) when the latter is in the cooking vessel (9).

14. Appliance according to any one of Claims 11 to 13, characterized in that the said inclined part of the bottom (18) which is adjacent to the first face extends in a plane forming an angle of 30 to 50° relative to a horizontal plane when the basket (6) is in the vessel (9) for frying foods.

15. Appliance according to any one of Claims 11 to 14, characterized in that the mechanism (5) comprises a motor (30) driving a shaft in rotation in one direction only and a means for converting the rotational movement of the shaft into an alternating movement, the said means comprising a crank (26) mounted on a shaft driven by the motor (30), a crank (27) mounted on the shaft (8) of the basket (6), and a bar connected pivotably to the said cranks.

## Patentansprüche

1. Einrichtung zum Braten von Nahrungsmitteln, wobei diese Einrichtung aufweist: (a) eine Wanne (9), (b) ein System, welches einen Korb (6), (c) einen Mechanismus (5), das System derart betätigend, uni den Korb (6) in bezug zur Wanne (9) zwischen einer Position, in der der Korb in die Wanne gestellt ist, um Nahrungsmittel zu Braten, und einer Position, in der der Korb außerhalb der Wanne (9) ist, um die gebratenen Nahrungsmittel in einen Behälter zuzuführen, zu versetzen, (d) ein System, um einen Teil von Nahrungsmitteln zum Braten in den Korb einzuführen, und (e) eine Tür beinhaltet, um den Behälter herauszunehmen, in welchen die gebratenen Nahrungsmittel zugeführt sind, wobei die Einrichtung ein Gehäuse (200) beinhaltet, welches eine Kammer (2) definiert, in welcher sich die Wanne (9) befindet und eine Vorrichtung (7), um Rauch oder Dunst zu extrahieren, wobei dieses Gehäuse in der Umgebung seines Bodens (207) oder an seinem Boden einen oder mehrere Kanäle beinhaltet, längs welcher der oder ein extrahierter Rauch oder Dunst vorbeigeht und zumindest teilweise kondensiert, dadurch gekennzeichnet, daß die Vorrichtung (7) Rauch oder Dunst aus der Kammer (2) auf eine Weise extrahiert, daß zumindest teilweise die Energie des Rauchs oder Dunstes wiedergewonnen ist, um das Gehäuse zu erwärmen, und dadurch, daß das System zum Laden eines Teils von Nahrungsmitteln zum Braten in einen Korb einen Tunnel (82) beinhaltet, welcher eine Abdeckung (84) aufweist, die abnehmbar oder zum Schwenken montiert ist, wobei der Tunnel zum Schwenken in einer Aufnahme (81) montiert ist welche eine erste Öffnung (85), um das Öffnen der Abdeckung (84) zuzulassen, und eine zweite Öffnung (86) aufweist, um den Durchgang von Nahrungsmitteln zum Braten vom Tunnel (82) in Richtung zum Korb (6) zuzulassen, wobei der Tunnel (82) in der Lage ist, zwischen einerseits einer ersten Position, bei welcher sich der Tunnel (82) in die Aufnahme erstreckt, um den Durchgang von Nahrungsmitteln zum Braten von dem Tunnel (82) in Richtung des Korbes (6) zu verhindern und um einen Teil von Nahrungsmitteln zum Braten in den Tunnel (82) einzuführen, wenn die Abdeckung (84) in geöffneter Position ist, und andererseits, nach Schließen der Abdeckung (84), einer zweiten Position zu schwenken, um über die zweite Öffnung (86) den Teil von Nahrungsmitteln vom Tunnel (82) in den Korb (6) einzuführen.

2. Einrichtung nach Anspruch 1, dadurch gekennzeichnet, daß der Tunnel (82) an seinem Boden einen Durchgang (88) aufweist und dadurch, daß die Aufnahme (81) eine erste Öffnung (85), um das Öffnen der Abdeckung (84) des Tunnels (82) zuzulassen, und eine zweite Öffnung (86) aufweist, durch welche der Durchgang (88) des Bodens des Tunnels (82) verbunden ist, um einen Teil von Nahrungsmitteln des Tunnels (82) in den Korb (6) einzuführen, wobei die Aufnahme (81) eine Wand (87) aufweist, die dazu dient, den Durchgang (88) des Tunnels (82) zu verschließen, während der Einführung von einem Teil von Nahrungsmitteln in den Tunnel (82), wohingegen der Tunnel (82) eine Wand (90) aufweist, die dazu dient, die zweite Öffnung (86) zu verschließen, während der Einführung von einem Teil von Nahrungsmitteln in den Tunnel (82).

3. Einrichtung nach Anspruch 1 oder 2, dadurch gekennzeichnet, daß die Kammer (2) einen Träger (4) für den Behälter aufweist, derart, daß die heiße Atmosphäre der Kammer (2) den Behälter erwärmt.

4. Einrichtung nach irgendeinem der Ansprüche 1 bis 3, dadurch gekennzeichnet, daß der Boden (207) des Gehäuses (200) zwei Wände (207A, 207B) aufweist, eine von der anderen getrennt, um einen Kanal (207C) zu definieren, durch welchen der oder ein Rauch oder Dunst, der aus der Kammer (2) extrahiert ist, hindurchgeht und zumindest teilweise kondensieren, derart, daß zumindest teilweise die Energie des Rauch, oder Dunstes wiedergewonnen ist, um den Boden (207) des Gehäuses (200) zu erwärmen.

5. Einrichtung nach Anspruch 4, dadurch gekennzeichnet, daß das Gehäuse (2) zumindest eine seitliche Seite aufweist, die zwei Wände (205A, 205B) aufweist, eine von der anderen getrennt, uni einen Kanal (205C) zu definieren, der sich von einer Öffnung der Kammer (2), definiert durch das Gehäuse und auf einem Niveau liegend, zumindest höher als der obere Rand der Wanne (9), bis zu einem Ende des Kanals (205C) erstreckt, durch weiches er mit dem Kanal (207C), definiert durch die Wände (207A, 207B) des Bodens (207) des Gehäuses (200) kommuniziert.

6. Einrichtung nach Anspruch 4 oder 5, dadurch gekennzeichnet, daß das Gehäuse (200) eine erste seitliche Seite aus einer Doppelwand (205A, 205B), zwischen welchen ein erster Kanal (205C) definiert ist, einen Boden (207) aus einer Doppelwand (207A, 207B), zwischen welchen ein zweiter Kanal (207C) definiert ist, aufweist und eine zweite seitliche Seite aus einer Doppelwand (206A, 206B), zwischen welchen ein dritter Kanal (206C) definiert ist, wobei der Rauch oder Dunst, der aus der Kammer (2), definiert durch das Gehäuse, extrahiert ist, durch die Extraktionsvorrichtung für Rauch oder Dunst (7) dazu gebracht wird, sich nach und nach in Richtung nach unten in den ersten Kanal (205C), danach in etwa horizontal in den zweiten Kanal (207C) und schließlich in Richtung nach oben in den dritten Kanal (206C) zu deplazieren.

7. Einrichtung nach irgendeinem der Ansprüche 4 bis 6, dadurch gekennzeichnet, daß die Vorrichtung zum Behandeln von Rauch und Dunst (7) einen Ozonisierungsapparat (79) beinhaltet.

8. Einrichtung nach irgendeinem der vorhergehenden Ansprüche, dadurch gekennzeichnet, daß das Gehäuse (200) eine Tür für die Zufuhr von Nahrungsmitteln zum Braten in dem Korb und eine Tür zum Herausnehmen des Behälters, welcher gebratene Nahrungsmittel enthält, aus der Kammer (2), aufweist, wobei die Türen derart eingerichtet sind, den gänzlichen Durchgang von Luft in die Kammer (2) zu verhindern und sicherzustellen, daß der gesamte aus der Kammer (2) extrahierte Dunst oder Rauch durch den oder die Kanäle des Gehäuses (200) hindurchgeht.

9. Einrichtung nach irgendeinem der Ansprüche 4 bis 8, dadurch gekennzeichnet, daß der oder die Kanäle (207C) des Bodens (207) des Gehäuses (200) als Trog oder Becken für eine Wiedergewinnung von Kondenswasser dienen und zumindest eine Entleerungsleitung für Kondenswasser aufweisen, wobei der oder die Kanäle (207C) des Bodens des Gehäuses einem oder mehreren Wärmetauschern (73) zugeordnet sind, in welchem oder welchen eine Flüssigkeit zirkuliert.

10. Einrichtung nach Anspruch 9, dadurch gekennzeichnet, daß der oder die Kanäle (207C) des Bodens (207) des Gehäuses (200) eine Frischluftzufuhr (77) aufweist, wobei diese Luft durch das Extraktionsmittel (70) für Rauch und Dunst aus der Kammer (2) angesaugt ist, wobei die Frischluft dazu dient, die Kondensation von Dunst zu fördern.

11. Einrichtung nach irgendeinem der vorhergeh enden Ansprüche, wobei diese Einrichtung einen Korb aufweist, der in der Nähe eines ersten seiner Ränder auf einer Welle (8) angebracht, fest in bezug zur Wanne (9), wobei der Korb eine erste Fläche (14), neben der Welle (8), eine zweite Fläche (15), der ersten Fläche (14) gegenüberliegend, zwei Seitenflächen (16, 17) und einen Boden (18) aufweist, sich zwischen der ersten und zweiten Fläche (14, 15) erstreckend, wobei die zweite Fläche (15) des Korbes (6) der ersten Fläche (14) gegenüberliegt, in bezug zur Wanne (9) derart eingerichtet, daß der Korb (6) durch Drehung in die Wanne (9) zugeführt werden kann, während der Boden (18) des Korbes (6) zumindest einen Teil aufweist, benachbart zur ersten Fläche, die sich in bezug zur ersten Fläche (14) in einer geneigten Ebene erstreckt, wobei sich der Teil in einer geneigten Ebene, in bezug zu einer horizontalen Ebene erstreckt, wenn der Korb (6) in Position in der Wanne (9) ist, um Nahrungsmittel zu Braten, dadurch gekennzeichnet, daß die Neigung der geneigten Fläche derart ist. daß der Teil des Bodens, der sich in derselben erstreckt, sich auf einer Höhe, gelegen unter dem unteren Rand (19) der ersten Fläche (14) befindet, wenn der Korb (6) in Position zum Braten von Nahrungsmitteln in der Wanne (9) ist.

12. Einrichtung nach Anspruch 11, dadurch gekennzeichnet, daß die Neigung δ zwischen der Ebene, in welcher sich die erste Fläche (14) erstreckt und der Ebene des geneigten Teils des Bodens (18), neben der ersten Fläche, größer als 100°. vorteilhafterweise größer als 110°, vorzugsweise ungefähr 120-125° ist

13. Einrichtung nach einem der Ansprüche 11 und 12, dadurch gekennzeichnet, daß der Korb (6) einen Sammler (21) aufweist, in der Verlängerung der ersten Fläche (14) liegend und dazu bestimmt, die gebratenen Nahrungsmittel aus dem Korb (6) zu führen, wenn der letztere in einer Position außerhalb der Wanne (9) ist wobei der Sammler (21) derart eingerichtet ist, daß er über den Korb (6) hinausragt, wenn dieser letztere in der Wanne zum Braten (9) ist.

14. Einrichtung nach irgendeinem der Ansprüche 11 bis 13, dadurch gekennzeichnet, daß der geneigte Teil des Bodens (18), der neben der ersten Fläche ist, sich in einer Ebene erstreckt, die einen Winkel von 30 bis 50° in bezug zu einer horizontalen Ebene bildet, wenn der Korb (6) in der Wanne (9) zum Braten von Nahrungsmitteln ist.

15. Einrichtung nach irgendeinem der Ansprüche 11 bis 14, dadurch gekennzeichnet, daß der Mechanismus (5) einen Motor (30) aufweist, der zur Drehung nur in eine Richtung eine Welle und ein Mittel antreibt, zum Konvertieren der Drehbewegung der Welle in eine alternative Bewegung, wobei das Mittel eine Kurbel (26), angebracht auf einer Welle, angetrieben durch den Motor (30), eine Kurbel (27), angebracht auf der Welle (8) des Korbes (6) und eine Stange, zum Schwenken mit den Kurbeln, beinhaltet.
